# EUROPÄISCHE PATENTSCHRIFT

(11) **EP 1 167 794 B1**
(45) Veröffentlichungstag und Bekanntmachung des Hinweises auf die Patenterteilung: **19.11.2003**
(21) Anmeldenummer: 00890197.7
(22) Anmeldetag: 26.06.2000
(51) Int. Cl.: F16C 35/063

(54) **Verfahren und Vorrichtung zur Montage von Wälzlagern**
Process and apparatus for mounting of rolling element bearings
Procédé et dispositif de montage de paliers à roulement

(43) Veröffentlichungstag der Anmeldung: 02.01.2002
(73) Patentinhaber: Pankl R&D GmbH, 8600 Bruck an der Mur (AT)
(72) Erfinder: Pankl, Gerold, 8600 Bruck an der Mur (AT); Domschitz, Jochen, 2421 Kittsee (AT)
(74) Vertreter: Patentanwälte BARGER, PISO & PARTNER

(56) Entgegenhaltungen:
- DE-A- 19 748 664
- US-A- 4 054 999
- US-A- 4 336 641
- US-A- 5 718 049

## Beschreibung

Die Erfindung betrifft ein Verfahren zur Montage von Wälzlagern und eine Montagevorrichtung für Wälzlager, insbesondere Schrägkugellager, beispielsweise in Radträgern von Automobilen, Flugzeugen und dergl..

Derartige Wälzlager müssen mit einer vom Lagerhersteller vorgegebenen Vorspannung montiert werden, um den richtigen Sitz aufzuweisen und die vorgesehene Lebensdauer zu erreichen. Bei einer Vielzahl von Serien-Automobilen befinden sich die beiden Wälzlager in unmittelbarer Nachbarschaft und ihre Laufflächen sind in axialer Richtung so gearbeitet, daß sie bei bündiger Montage über die notwendige Vorspannung verfügen.

Bei Hochleistungskraftfahrzeugen, insbesondere bei Rennautos weisen allerdings die beiden Wälzlager, zumeist Schräglaufkugellager, beachtlichen Abstand zwischen einander auf, da bei derartigen Fahrzeugen die Reifen über eine große Breite verfügen und es bei unmittelbar benachbarten Kugellagern zu unzulässigen Kippmomenten kommen könnte. Dies macht es notwendig, die erforderliche Vorspannung auf eine andere Weise sicherzustellen, als im Serien-Automobilbau. Bisher behalf man sich mit der großen Erfahrung der Monteure, die durch einige wenige Versuche der Drehbarkeit der Lager feststellen konnten, ob die Lager größenordnungsmäßig die richtige Vorspannung aufwiesen oder nicht. Durch die zunehmende Verwendung von Keramikmaterialien bei Kugellagern, z.Bsp. für die Wälzkörper, insbesondere Kugeln, ist es nun ganz wichtig geworden, diese Vorspannung in engen Grenzen einzuhalten, da das Lager sonst Schaden erleidet.

Die Erfindung zielt darauf ab, eine Montagevorrichtung und ein Montageverfahren zu schaffen, die, bzw. das, es ermöglicht, die Vorspannung von Wälzlagern während des Montierens leicht zu überprüfen und so die richtige vom Hersteller vorgeschriebene Vorspannung zu erreichen und einzuhalten.

Erfindungsgemäß geschieht dies dadurch, daß im Inneren einer Hohlwelle eine Längenmeßvorrichtung gegen einen Anschlag bekannter Lage im axialen Bereich des einen Wälzlagers angelegt wird und beim Anziehen der Wellenmutter gegen den wellenseitigen Laufring des anderen Wälzlagers dessen axiale Verschiebung gegenüber dem Anschlag im Hohlwelleninneren, bestimmt wird, wobei beim Anziehen der Wellenmutter ein Drehmomentschlüssel verwendet wird, der es erlaubt, den eigentlichen Spannvorgang des Wälzlagers vom vorhergehenden zum Anschlag bringen der Wellenmutter zu unterscheiden.

Auf diese Weise ist es möglich, wenn die Geometrie und der Werkstoff der Hohlwelle bekannt ist, was ja durch deren Konstruktion, beispielsweise über Finite-Elemente-Programme, heute praktisch immer der Fall ist, das Verhältnis zwischen Längskraft und Dehnung ausreichend genau zu bestimmen, um mit der Messung der Abstandsänderung des Längenmeßinstrumentes zur richtigen Vorspannung des Wälzlagers zu kommen.

Nur mit einem Drehmomentschlüssel allein wäre dies wegen der niemals reproduzierbaren Verhältnisse einerseits zwischen Wellenmutter und Gewinde und anderseits zwischen Wellenmutter und innerer Laufbahn des einen Lagers nicht möglich, zu aussagekräftigen Daten zu kommen. Es reichen aber die unterschiedlichen Drehmomente beim Zudrehen der Wellenmutter bis zum Wälzlagerring und das anschließende Aufbringen der Vorspannung aus, um hier nur die Längenänderungen zu berücksichtigen, die auf den Vorspannprozeß zurückgehen.

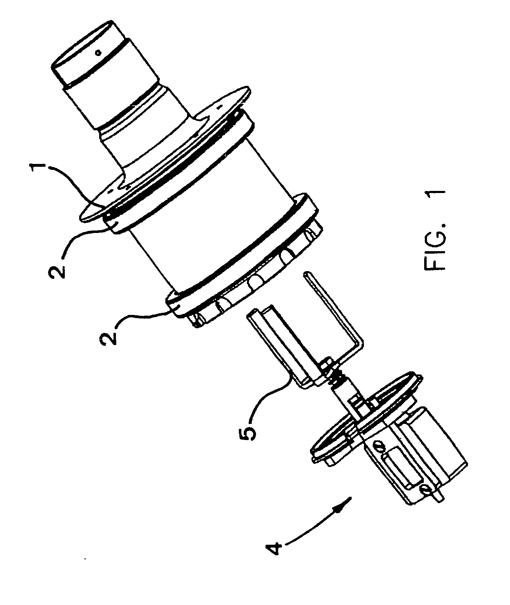

Die Erfindung wird im folgenden an Hand der Zeichnungen näher erläutert. Dabei zeigt die Fig. 1 eine Ansicht einer erfindungsgemäßen Montagevorrichtung vor ihrem Einbringen in eine Hohlwelle und

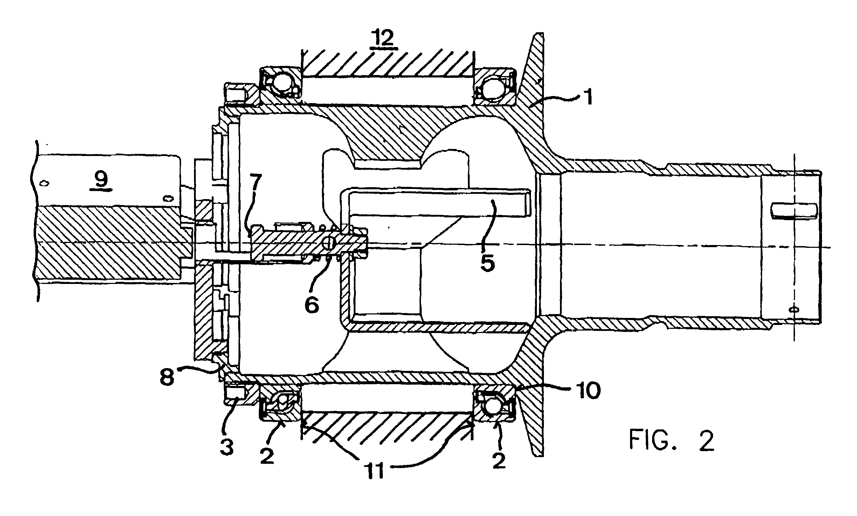

die Fig. 2 einen Schnitt durch eine solche Montagevorrichtung nach ihrem Einbringen in die Hohlwelle.

Fig. 1 zeigt eine Schrägansicht einer Hohlwelle 1, mit zwei Wälzlagern 2 und einer erfindungsgemäßen Montagevorrichtung 4 vor ihrem Einbringen in die Hohlwelle 1 zur Durchführung der Montage bzw. dem Aufbringen der Vorspannung der Wälzlager 2.

Wie besser aus Fig. 2 ersichtlich ist, liegt das eine Wälzlager mit seinem Innenring an einer Schulter 10 der Hohlwelle 1 an, während das andere mit seinem Innenring an der Wellenmutter 3 anliegt, durch deren Anziehen die beiden Innenringe der Wälzlager 2 zueinander gedrückt werden können.

Zwischen den beiden Außenringen der Wälzlager 2 liegen Schultern 11 des Radträgers 12, der aus Gründen der Übersichtlichkeit nicht dargestellt ist, bei der Montage aber selbstverständlich bereits aufgebracht ist, da ja gegen diese Schultern 11 die vom Lagerhersteller geforderte Vorspannung der beiden Wälzlager 2 aufgebracht werden muß.

Die erfindungsgemäße Vorrichtung, in ihrer Gesamtheit mit 4 bezeichnet, besteht im wesentlichen aus einem Taster 5, der längsverschieblich mit einer eigentlichen Meßvorrichtung 9 verbunden ist. Die Meßvorrichtung 9 ist axial fest (oder fixierbar) mit einem Anschlag 8 verbunden, der am äußeren Bereich der Hohlwelle 1 aufliegt. Die Montagevorrichtung 4 ist in radialer Richtung so schlank gebaut, daß die Wellenmutter 3, die die Wälzlager 2 sichert und ihnen die notwendige Vorspannung verleiht, über die Montagevorrichtung 4 geschoben werden kann und daß auch der Spezialschlüssel, mit dem die Wellenmutter angezogen wird, über die Montagevorrichtung 4 paßt.

Während der Montage stützt sich der Stützteil bzw. Taster 5 gegen einen inneren Anschlag der Hohlwelle, der im Bereich des rechten Wälzlagers 2 liegt, während der Anschlag 8 sich in dem Bereich abstützt, indem das linke Wälzlager 2 angeordnet ist. Eine Feder 6 stellt sicher, daß der Taster 5, der ja bezüglich der Meßvorrichtung 9 und des Anschlages 8 axial verschieblich ist, von diesen möglichst weggeschoben wird.

Mit dem Anschlag 5 fest verbunden ist eine Meßfläche 7, die bevorzugt spiegelnd ausgebildet ist und deren Entfernung zum Anschlag 8 mittels eines Laser-Abstands-Meßgerätes oder auch mittels eines empfindlichen Meßfühlers festgestellt werden kann.

Die Montage erfolgt folgendermaßen: Es werden die Wälzlager 2 mit dem entsprechenden Radträger bzw. Radträgerteil 12 auf die Hohlwelle 1 aufgeschoben, es wird die Wellenmutter 3 aufgesetzt und es wird die Montagevorrichtung 4 an die Hohlwelle 1 angedrückt, was über eine externe Fixierung oder ein Gewinde od.dgl. erfolgen kann. Sodann wird die Wellenmutter 3 mit einem Drehmomentschlüssel angezogen, bei dem abgelesen werden kann, mit welchem Drehmoment das Anziehen erfolgt. Simultan dazu wird am Meßgerät 9 oder einem damit verbundenen Monitor abgelesen, wie sich der Abstand zwischen dem Taster 5 und dem Anschlag 8 ändert.

Wenn die Wellenmutter 3 fest am Innenring des linken Wälzlagers 2 anliegt, ist das zum Weiterdrehen des Drehmomentschlüssels benötigte Drehmoment, das ja nun aufgebracht werden muß, um die Vorspannung zu schaffen, deutlich größer als bisher und gleichzeitig damit erhöht sich erstmals der Abstand zwischen dem Taster 5 und dem Anschlag 8. Die Korrelation dieser beiden Änderungen erlaubt es, sowohl den einwandfreien Sitz der Lager und der Wellenmutter als auch den Beginn der Spanntätigkeit zu überprüfen.

In der Folge wird die Wellenmutter 3 mit zunehmend stärkerem Drehmoment angezogen und es wird am Meßgerät 9 eine größer werdende Entfernung zwischen Meßpunkten des Tasters 5 und des Anschlags 8 festgestellt. Wenn diese Längenänderung dem Wert entspricht, der dieser Hohlwelle für eine vorgegebene Vorspannung zugeordnet worden ist, so ist am Wälzlager die richtige Vorspannung erreicht und die Wellenmutter kann in der dann erreichten Lage gesichert werden. Die Montagevorrichtung 4 wird in axialer Richtung aus der Hohlwelle gezogen und die Hohlwelle ist für die Endmontage fertig.

Den Zusammenhang zwischen der Längenänderung und der damit erzielten Vorspannung erhält man in Kenntnis der Konstruktionsdetails der Hohlwelle 1, insbesondere deren Geometrie (Materialanhäufungen) und des ausgewählten Materials. Wesentlich ist dabei nur, daß die jeweiligen Anschläge für die Meßfühler 5 und 8 einerseits im Bereich des einen, andererseits im Bereich des anderen Wälzlagers liegen. Da eine genaue axiale Übereinstimmung nicht mit vertretbarem Aufwand erreichbar ist, da die konstruktiven Gegebenheiten dies nicht zu lassen, ist es notwendig, aber in Kenntnis der Konstruktion der Hohlwelle auch leicht möglich, die entsprechenden Dehnungswerte für die verwendeten Anschläge in der Hohlwelle zu finden, wie sie beispielsweise in Fig. 2 dargestellt sind:

Anschlag des Tasters 5 im Endbereich des Tragabschnittes der Hohlwelle und Anschlag 8 am äußeren Endbereich der Hohlwelle, liegen somit jeweils etwas außerhalb des Sitzes der Lager.

Es kann somit für jede Hohlwelle eine Liste von Wertepaaren geschaffen werden, die die bei der Montage zu messende Dehnung mit der aus den Konstruktionsunterlagen zuvor errechneten und gegebenenfalls auch experimentell überprüften Vorspannung korreliert. Auf diese Weise ist die erforderliche genaue Erzielung der Vorspannungen für Wälzlager, insbesondere für Wälzlager mit keramischen Bauteilen und hier wieder speziell für Schräglaufkugellager leicht und schnell möglich, was insbesondere bei Ausbauten und Umbauten bei Pannen im freien Gelände extrem wichtig ist.

Die Erfindung ist nicht auf das beschriebene Beispiel zweier Wälzlager eines Radträgers beschränkt sondern kann bei Werkzeugmaschinen genau so verwendet werden wie bei Wellenlagerungen im Maschinenbau ganz allgemein. Zur Durchführung ist nur die Existenz einer Möglichkeit zum Anschlag der Meßfühler vorrichtung im Bereich eines der beiden Lager erforderlich.

## Patentansprüche

1. Verfahren zur Montage von vorgespannten Wälzlagern, insbesondere Schrägkugellager, beispielsweise in Radträgem von Automobilen, Flugzeugen und dergl.., **dadurch gekennzeichnet, daß** die Montagevorrichtung (4) mit einem Meßfühler (5) an einem Anschlag, einer Schulter, od.dergl. im axialen Bereich des wellenseitigen Laufringes des einen Wälzlagers (2) anliegt und daß beim Anziehen der Wellenmutter (3) gegen den wellenseitigen Laufring des anderen Wälzlagers (2) dessen axiale Verschiebung gegenüber dem Anschlag bestimmt wird, wobei beim Anziehen der Wellenmutter (3) ein Drehmomentschlüssel zur Ermittlung des aufgebrachten Drehmomentes verwendet wird, was es erlaubt, den eigentlichen Spannvorgang des Wälzlagers vom vorhergehenden zum Anschlag bringen der Wellenmutter zu unterscheiden.

2. Verfahren nach Anspruch 1, **dadurch gekennzeichnet, daß** bei der Montage von Wälzlagern (2) in Radträgern von Automobilen, Flugzeugen und dergl. der Anschlag in einer Hohlwelle (1) vorgesehen ist.

3. Verfahren nach Anspruch 1 oder 2, **dadurch gekennzeichnet, daß** die Änderung des Abstandes mittels eines Laserabstandmeßgerätes bestimmt wird.

4. Vorrichtung zur Durchführung des Verfahrens nach einem der Ansprüche 1 bis 3, **dadurch gekennzeichnet, daß** sie über zumindest einen Meßfühler (5) und einen, gegebenenfalls ringförmigen, Anschlag (8) verfügt, daß der Meßfühler (5) axial beweglich gegenüber dem Anschlag (8) montiert ist, daß mit dem Anschlag (8) eine Meßvorrichtung zur Bestimmung der Abstandsänderung zwischen dem Meßfühler (5) und dem Anschlag (8), bevorzugt eine Lasermeßvorrichtung, verbunden ist und daß eine Vorrichtung zur Auswertung der Messung mit der Meßvorrichtung verbunden ist

5. Vorrichtung nach Anspruch 4, **dadurch gekennzeichnet, daß** eine Messfläche (7) mit dem Meßfühler (5) fest verbunden ist und als Referenzfläche für die Abstandsmessung dient.

## Claims

1. Method of fitting prestressed rolling-contact bearings, in particular angular-contact ball bearings, for example in wheel carriers of automobiles, aircraft and the like, **characterized in that** the fitting device (4), with a measuring sensor (5), bears against a stop, a shoulder or the like in the axial region of the shaft-side raceway of the one rolling-contact bearing (2), and **in that**, when the shaft nut (3) is tightened against the shaft-side raceway of the other rolling-contact bearing (2), the axial displacement of the latter relative to the stop is determined, a torque wrench being used for determining the applied torque during the tightening of the shaft nut (3), a factor which allows the actual stressing process of the rolling-contact bearing to be distinguished from the preceding stressing process for bringing the shaft nut against the stop.

2. Method according to Claim 1, **characterized in that** the stop is provided in a hollow shaft (1) when rolling-contact bearings (2) are fitted in wheel carriers of automobiles, aircraft and the like.

3. Method according to Claim 1 or 2, **characterized in that** the change in the distance is determined by means of a laser distance-measuring instrument.

4. Device for carrying out the method according to one of Claims 1 to 3, **characterized in that** it has at least one measuring sensor (5) and a, possibly annular, stop (8), **in that** the measuring sensor (5) is mounted such as to be axially movable relative to the stop (8), **in that** a measuring device for determining the change in distance between the measuring sensor (5) and the stop (8), preferably a laser measuring device, is connected to the stop (8), and **in that** a device for evaluating the measurement is connected to the measuring device.

5. Device according to Claim 4, **characterized in that** a measuring surface (7) is firmly connected to the measuring sensor (5) and serves as a reference surface for the distance measurement.

## Revendications

1. Procédé de montage de paliers à roulement précontraint, notamment de roulements à billes à portée oblique, par exemple dans des supports de roues, de véhicules automobiles, des avions et similaires, **caractérisé en ce que** le dispositif de montage (4) prend appui par une sonde de mesure (5) sur une butée, un épaulement ou similaire dans la zone axiale de la bague de roulement côté arbre de l'un des paliers de roulement (2), et **en ce que** lors du serrage de l'écrou d'arbre (3) contre la bague de roulement côté arbre de l'autre palier à roulement (2), on détermine le coulissement axial de celui-ci vis-à-vis de la butée, lors du serrage de l'écrou d'arbre (3), une clé dynamométrique étant utilisée pour la détermination du couple de rotation appliqué, ce qui permet de différencier le processus de contrainte propre du palier à roulement de l'amenée préalable de l'écrou d'arbre sur la butée.

2. Procédé selon la revendication 1, **caractérisé en ce que** lors du montage de paliers à roulement (2) dans des supports de roue d'automobiles, d'avions et similaires, la butée est prévue dans un arbre creux (1).

3. Procédé selon la revendication 1 ou 2, **caractérisé en ce que** le changement de l'écartement est déterminé au moyen d'un appareil à laser pour la mesure de l'écartement.

4. Dispositif pour la mise en oeuvre du procédé selon l'une des revendications 1 à 3, **caractérisé en ce qu'**il comprend pour le moins une sonde de mesure (5) et une butée (8) éventuellement annulaire, **en ce que** la sonde de mesure (5) est montée mobile axialement par rapport à la butée (8), **en ce qu'**un dispositif de mesure est relié à la butée pour la détermination du changement d'écartement entre la sonde de mesure (5) et la butée (8), de préférence un dispositif de mesure par laser, et **en ce qu'**un dispositif d'exploitation de la mesure est relié au dispositif de mesure.

5. Dispositif selon la revendication 4, **caractérisé en ce qu'**une surface de mesure (7) est solidement reliée à la sonde de mesure (5) et sert à la mesure de l'écartement comme surface de référence.
